(19) Europäisches Patentamt
European Patent Office
Office européen des brevets

(11) **EP 4 807 853 A1**

(12) **EUROPEAN PATENT APPLICATION**

(43) Date of publication:
**16.09.2026 Bulletin 2026/38**

(21) Application number: **26164470.2**

(22) Date of filing: **12.03.2026**

(51) International Patent Classification (IPC):
***H01M 10/44*** *(2006.01)* ***H01M 4/38*** *(2006.01)*
***H01M 4/583*** *(2010.01)*

(52) Cooperative Patent Classification (CPC):
**H01M 4/38; H01M 4/583; H01M 10/446**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.03.2025 KR 20250032636**

(71) Applicant: **Hansol Chemical Co., Ltd**
**Seoul 06169 (KR)**

(72) Inventors:
- **PARK, Su-Hyun**
  **54524 Iksan-si (KR)**
- **KANG, Sung-Hwan**
  **54524 Iksan-si (KR)**
- **JANG, Bo-Ok**
  **54524 Jeonbuk-do (KR)**
- **CHOE, Yeong-Hwa**
  **54524 Iksan-si (KR)**
- **AHN, Jun-Uk**
  **54524 Jeonbuk-do (KR)**
- **YIM, Hyeon-Min**
  **54524 Jeonbuk-do (KR)**
- **PARK, Min-Jee**
  **54524 Iksan-si (KR)**
- **CHOI, Su-Min**
  **54524 Iksan-si (KR)**
- **KIM, Chang-Beom**
  **54524 Iksan-si (KR)**
- **KWON, Se-Man**
  **54524 Iksan-si (KR)**

(74) Representative: **Ipsilon**
**12 Avenue d'Italie**
**75013 Paris (FR)**

# (54) ANODE ACTIVE MATERIAL, METHOD FOR PREPARING SAME, AND RECHARGEABLE LITHIUM BATTERY INCLUDING SAME

(57) Proposed are an anode active material, a method for preparing the same, an electrode including the anode active material, and a rechargeable lithium battery including the same, in which when a discharge curve of a third charge-discharge cycle during a formation process, measured by incremental capacity analysis (ICA), is converted into a differential capacity versus voltage curve (dQ/dV) by normalizing the discharge curve with respect to the initial discharge capacity of each cell, the ratio of the maximum peak height observed in a voltage region of 3.0 to 3.3 V to the maximum peak height observed in a voltage region of 3.6 to 4.0 V is equal to or less than 60%.

EP 4 807 853 A1

## Description

BACKGROUND OF THE INVENTION

Field of the Invention

The present disclosure relates to an anode active material, a method for preparing the same, and a rechargeable lithium battery including the same.

Additionally, the present disclosure relates to an anode active material capable of providing a rechargeable battery having high discharge capacity and high initial coulombic efficiency (ICE), based on incremental capacity analysis (ICA) of a full cell including the anode active material according to the present disclosure, and to a method for preparing the same and a rechargeable lithium battery including the same.

Description of the Related Art

Lithium ion batteries (LIBs) possess high energy density and design flexibility, and thus have been widely adopted as primary power sources for mobile electronic devices. Their application range is rapidly expanding into electric vehicles (EVs) and energy storage systems (ESS) for renewable energy.

To meet the requirements of these emerging applications, continuous research efforts have been directed toward the development of LIB materials exhibiting higher energy density and extended cycle life.

In particular, various anode materials, including carbonaceous materials as well as silicon, tin, and germanium, have been extensively investigated.

Among these candidates, silicon-based anode materials have attracted significant attention because they offer substantially higher theoretical energy density compared to commercially available graphite anodes.

Despite this advantage, silicon-based anode materials suffer from critical drawbacks, such as the formation of an unstable solid electrolyte interphase (SEI) layer due to parasitic reactions between a silicon surface and an electrolyte, leading to deterioration of electrochemical performance. Additionally, severe volume expansion of silicon during charge-discharge cycling induces internal stress, resulting in fragmentation of the electrode material.

To mitigate these issues, numerous studies have focused on improving surface reversibility through various surface treatment strategies for silicon-based anode materials. In particular, surface coating or compositing with carbon materials is considered a highly effective approach.

Nevertheless, conventional surface treatment methods utilizing carbon materials typically require complex and costly processes. While such carbon-based surface modifications have improved certain performance characteristics, such as cycle life, of silicon-based anode materials, they often result in reduced ionic conductivity. Consequently, there remain inherent limitations in enhancing output characteristics necessary for the realization of high-rate chargeable and dischargeable LIBs, for which demand has recently been increasing.

In other words, prior surface treatment approaches involving carbon materials have focused heavily on compositing with carbon without fundamentally improving the inherently low ionic conductivity of silicon-based anode materials. As a result, achieving the output performance required for high-rate LIBs has been challenging.

Accordingly, there is a pressing need for the development of surface treatment technologies for high-capacity silicon-based anode active materials that simultaneously suppress volume expansion and enhance low inherent ionic conductivity of silicon-based anode materials.

The foregoing is intended merely to aid in the understanding of the background of the present disclosure, and is not intended to mean that the present disclosure falls within the purview of the related art that is already known to those skilled in the art.

Documents of Related Art

(Patent document 1) Korean Patent Application Publication No. 10-2021-0150769

SUMMARY OF THE INVENTION

Accordingly, the present disclosure has been made keeping in mind the above problems occurring in the related art, and one objective of the present disclosure is to provide an anode active material for a high-power rechargeable battery that exhibits high capacity and high energy density while maintaining stable charge/discharge behavior even under high current density conditions.

Another objective of the present disclosure is to provide a method for preparing the above-described anode active material with high efficiency and at low cost.

Still another objective of the present disclosure is to provide an electrode including the anode active material and a rechargeable lithium battery including the same.

The objectives of the present disclosure are not limited to those mentioned above, and other objectives not mentioned will be clearly understood by those skilled in the art from the description provided hereinafter.

In order to achieve the above objectives, according to one aspect of the present disclosure, there is provided an anode active material, in which when a discharge curve of a third charge-discharge cycle during a formation process, measured by incremental capacity analysis (ICA), is converted into a differential capacity versus voltage curve (dQ/dV) by normalizing the discharge curve with respect to an initial discharge capacity of each cell, and when a ratio of a maximum peak height observed in a voltage region of 3.0 to 3.3 V to a maximum peak height observed in a voltage region of 3.6 to 4.0 V ((maximum peak height in the voltage region of 3.0 to 3.3 V/maximum peak height in the voltage region of 3.6 to 4.0 V) * 100) is defined as $\beta$, the $\beta$ may be equal to or less than 60%.

According to another aspect of the present disclosure, there is provided a method for preparing the anode active material, the method including: a first step of preparing a precursor powder by spray-drying a solution containing a metal-containing particle; a second step of mixing and compositing the precursor powder with crystalline carbon and amorphous carbon; and a third step of heat-treating the composited powder, in which the metal may include at least one selected from the group consisting of Si, Al, Ti, Mn, Ni, Cu, V, Zr, Co, Fe, and Nb, and an internal chamber pressure in the first step may be maintained at 5.0 to 7.0 kPa.

According to still another aspect of the present disclosure, there is provided a rechargeable lithium battery, including: an anode including the anode active material; a cathode positioned opposite to the anode; and an electrolyte disposed between the anode and the cathode.

The anode active material according to the present disclosure can provide a high-power rechargeable battery that exhibits high capacity and high energy density while maintaining stable charge/discharge behavior even under high current density conditions.

Additionally, the anode active material can be manufactured with high efficiency and at low cost.

## BRIEF DESCRIPTION OF THE DRAWINGS

The above and other objectives, features, and other advantages of the present disclosure will be more clearly understood from the following detailed description when taken in conjunction with the accompanying drawings, in which:

FIG. 1 is a discharge curve graph according to incremental capacity analysis (ICA) of a full cell including an anode active material of Example 3 of the present disclosure, illustrating normalized differential capacity (dQ/dV) data obtained at each discharge step during an initial formation process (a total of three charge-discharge cycles);

FIG. 2 is a discharge curve graph according to incremental capacity analysis of a full cell of Comparative Example 2 of the present disclosure, illustrating normalized differential capacity (dQ/dV) data obtained at each discharge step during an initial formation process (a total of three charge-discharge cycles);

FIG. 3 is a graph illustrating a comparison of the capacity retention (%) after repeating 1 to 500 charge-discharge cycles for full cells of Comparative Example 1, Comparative Example 2, Comparative Example 3, and Example 1 of the present disclosure;

FIG. 4 is a graph illustrating a comparison of the capacity retention (%) after repeating 1 to 500 charge-discharge cycles for full cells of Example 1, Example 3, and Example 5 of the present disclosure; and

FIG. 5 is a graph illustrating a comparison of the capacity retention (%) after repeating 1 to 500 charge-discharge cycles for full cells of Comparative Example 3, Example 2, and Example 4 of the present disclosure.

## DETAILED DESCRIPTION OF THE INVENTION

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the concept of the term to describe most appropriately the best method he or she knows for carrying out the present disclosure.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, when various parameters are given as either a range, a preferred range, or a list of upper preferable values and/or lower preferable values, this is to be understood as specifically disclosing all ranges formed from any pair of any upper range limits or preferred values and any lower range limits or preferred values, regardless of whether the ranges are separately disclosed.

When a range of numerical values is recited herein, unless otherwise stated, the range is intended to include the endpoints thereof, and all integers and fractions within the range.

The scope of the present disclosure not be limited to specific values used in defining a range for a certain parameter.

In this specification, "a to b" and "a~b" indicating a numerical range are defined as $\geq$ a and $\leq$ b.

Hereinafter, exemplary embodiments of the present disclosure will be described in detail, but the present disclosure is not limited thereto.

An anode active material according to one aspect of the present disclosure is characterized in that a discharge curve of the third charge-discharge cycle of a formation process, measured by incremental capacity analysis (ICA), is converted into a differential capacity versus voltage (dQ/dV) curve by normalizing the discharge curve with respect to the initial discharge capacity of each cell. In the resulting dQ/dV curve, when the ratio of the maximum peak height observed in a voltage region of 3.0 to 3.3 V to the maximum peak height observed in a voltage region of 3.6 to 4.0 V ((maximum peak height in the voltage region of 3.0 to 3.3 V/maximum peak height in the voltage region of 3.6 to 4.0 V) * 100) is defined as $\beta$, the $\beta$ may be equal to or less than 60%.

Here, the ICA refers to a diagnostic technique in which a battery discharge curve is mathematically differentiated to obtain a differential capacity profile (dQ/dV) from "capacity (Q) versus voltage (V) data", thereby enabling resolved (amplified) observation of capacity variations within each voltage region. This technique is particularly advantageous for clearly identifying phase transitions or electrochemical reaction characteristics occurring within specific voltage ranges during the formation process.

During a discharge step of the formation process, the peak observed in the voltage region of 3.0 to 3.3 (hereinafter referred to as "Peak B") may serve as an indicator reflecting a crystalline-amorphous transition state within the silicon anode active material.

In one embodiment of the present disclosure, the maximum height ($V^{-1}$) of the Peak B may be 0.5 to 1.0 $V^{-1}$.

For example, the maximum height of the Peak B may be 0.5 V to 1.0 $V^{-1}$, 0.5 to 0.6 $V^{-1}$, 0.6 to 0.7 $V^{-1}$, 0.7 to 0.8 $V^{-1}$, 0.8 to 0.9 $V^{-1}$, or 0.9 to 1.0 $V^{-1}$.

When the maximum height of the Peak B falls below the above-defined range, it may be interpreted that the crystalline-amorphous transition of the silicon anode active material has not sufficiently occurred. This may lead to a lack of appropriate crystalline structure development, which in turn may result in an increase in internal resistance.

Additionally, the peak observed in the voltage region of 3.6 to 4.0 V(hereinafter referred to as "Peak A") may be regarded as reflecting electrochemical reactions occurring at a cathode. Accordingly, in the dQ/dV curve analysis, Peak A may serve as a relative reference peak.

In one embodiment of the present disclosure, the maximum height ($V^{-1}$) of the Peak A may be 1.0 to 2.5 $V^{-1}$.

For example, the maximum height of the Peak A may be 1.0 V to 2.5 $V^{-1}$, 1.3 to 2.2 $V^{-1}$, 1.6 to 2.0 $V^{-1}$, 1.0 to 1.3 $V^{-1}$, 1.3 to 1.6 $V^{-1}$, 1.6 to 1.9 $V^{-1}$, 1.9 to 2.2 $V^{-1}$, or 2.2 to 2.5 $V^{-1}$.

Meanwhile, when the ratio of the maximum height of the Peak A in the second or third discharge to the maximum height of the Peak A in the first discharge ((maximum height of the Peak A in the second or third discharge/maximum height of the Peak A in the first discharge) * 100) exceeds or falls below the range of 90% to 110%, the Peak A may be difficult to utilize as a reliable reference peak.

Meanwhile, the $\beta$ refers to the ratio of the maximum height of Peak B to the maximum height of Peak A measured during the third charge-discharge cycle of the formation process. This parameter serves as a quantitative indicator for evaluating how the silicon anode active material undergoes crystalline-amorphous transformation during repeated charge-discharge cycling. The calculation of $\beta$ is represented by the following Equation 1:

[Equation 1]

$$\beta = (\text{maximum height of Peak B/ maximum height of Peak A}) * 100\ (\%)$$

(where both the Peak A and Peak B correspond to values measured during the third charge-discharge cycle)

For example, the $\beta$ value may be 30% to 60%. That is, the $\beta$ value may be 30% to 60%, 35% to 60%, 40% to 60%, 30% to 42.5%, 42.5% to 43.0%, 43.0% to 49.1%, 49.1% to 51.7%, 51.7% to 55.0%, 55.0% to 60%, 41% to 42.8%, 42.8% to 45%, 45% to 50%, 50% to 53%, or 53% to 57%.

When the $\beta$ value exceeds the above-defined range, the crystalline phase of the silicon anode active material may not be sufficiently amorphized during the initial formation process. As a result, continued amorphization may occur during subsequent charge-discharge cycles, leading to volume expansion and electrode degradation.

The Peak B may be observed in the voltage region of 3.0 to 3.3 V, preferably in a voltage region of 3.1 to 3.25 V. When the peak position deviates from the above-defined voltage range, it becomes difficult to accurately determine the voltage region in which the silicon anode active material loses its crystalline phase and transitions into an amorphous phase. Such deviation may introduce ambiguity in interpreting the dQ/dV curve, thereby hindering proper tracking of silicon phase transition behavior during the initial formation process.

Additionally, the Peak A may be observed in the voltage region of 3.6 to 4.0 V, preferably in a voltage region of 3.7 to 3.9 V. When the peak position deviates from the above-defined voltage range, the reference point used for relative comparison and evaluation with the anode-related reaction (Peak B) may become ambiguous. Consequently, the reference baseline required for interpreting the characteristics of the anode active material in the dQ/dV curve may vary, making it difficult to quantitatively assess the crystalline-amorphous transition behavior and volume expansion suppression performance of the silicon anode active material.

Meanwhile, the ICA may be performed on a full cell including the anode active material of the present disclosure. In performing the ICA, the data recording interval may be set to one data point per minute (1 point/min), and the cycling may be conducted for at least 10 hours to collect 600 or more data points.

In one embodiment of the present disclosure, the anode active material may satisfy the following characteristic. Specifically, a discharge curve of a first charge-discharge cycle during the formation process, measure by the ICA, is converted into a differential capacity versus voltage (dQ/dV) curve by normalizing the discharge curve with respect to the initial discharge capacity of each cell. In the resulting dQ/dV curve, when the ratio of the maximum peak height observed in a voltage region of 3.0 to 3.3 V to the maximum peak height observed in a voltage region of 3.6 to 4.0 V ((maximum peak height in the voltage region of3.0 to 3.3 V /maximum peak height in the voltage region of 3.6 to 4.0 V) * 100) is defined as $\alpha$, the value of $\beta/\alpha$ may be equal to or less than 1.0.

Here, the $\alpha$ represents the ratio of the maximum height of Peak B to the maximum height of Peak A measured in the first charge-discharge cycle, and serves as a baseline indicator for evaluating the degree of crystalline-amorphous transition of the silicon anode active material during the initial formation process.

The calculation of the $\alpha$ is expressed by the following Equation 2:

[Equation 2]

$$\alpha = (\text{maximum height of Peak B/maximum height of Peak A}) * 100\ (\%)$$

(where both the Peak A and Peak B correspond to values measured during the first charge-discharge cycle)

Meanwhile, the $\beta/\alpha$ value represents the change in the Peak B/Peak A ratio between the third cycle and the first cycle. This parameter may be interpreted as a key indicator for evaluating how rapidly and uniformly the silicon anode active material undergoes amorphization during repeated charge-discharge cycling, and whether stable electrochemical characteristics are established.

For example, the $\beta/\alpha$ value may be 0.60 to 1.0. That is, the $\beta/\alpha$ value may be 0.65 to 1.0, 0.70 to 1.0, 0.60 to 0.733, 0.733 to 0.79, 0.79 to 0.902, 0.902 to 0.976, 0.976 to 0.995, 0.995 to 1.0, 0.60 to 0.75, 0.75 to 0.85, 0.85 to 0.92, 0.92 to 0.98, or 0.98 to 1.0.

When the $\beta/\alpha$ value exceeds the above-define range, crystallization of the silicon anode active material may not be sufficiently suppressed even after repeated charge-discharge cycling. As a result, continued structural transformation and associated volume expansion may proceed, accelerating electrode degradation. Furthermore, instability of a solid electrolyte interphase (SEI) layer formed during the formation process may occur, potentially leading to deterioration in long-term cycle life performance.

In one embodiment of the present disclosure, the charge-discharge cycles during the formation process, as measured by ICA, may be conducted under controlled electrochemical conditions. Specifically, the current density may be set within a range of 0.05 to 0.3 C, and the voltage range may be controlled within a range of 2.5 to 4.3 V.

For example, the current density may be 0.05 to 0.3 C, 0.05 to 0.1 C, 0.1 to 0.2 C, 0.2 to 0.3 C, or 0.05 to 0.15 C.

When the current density exceeds the above-defined range, phase transformation of the anode active material and formation of a solid electrolyte interphase (SEI) layer (hereinafter referred to as "SEI") may proceed too rapidly during the formation process, thereby reducing the reproducibility and accuracy of ICA analysis. On the other hand, when the current density falls below the above-defined range, a prolonged test duration or limitations in instrument resolution may likewise impair the reproducibility and accuracy of ICA analysis.

For example, the voltage range may be 2.5 to 4.3 V, preferably 2.75 to 4.2 V. When the voltage range exceeds or falls below the above-defined range, parasitic reactions or overpotential-driven reactions may occur. Such side reactions may distort or damage the electrochemical characteristics of the anode active material.

In one embodiment of the present disclosure, the full cell including the anode active material may further include a lithium transition metal oxide as a cathode active material. The lithium transition metal oxide may include a lithium nickel cobalt manganese oxide (NCM)-based material, a lithium nickel cobalt aluminum oxide (NCA)-based material, lithium

cobalt oxide (LCO), lithium manganese oxide (LMO), lithium iron phosphate (LFP), or a combination thereof.

For example, the lithium nickel cobalt manganese oxide (NCM)-based material may include NCM111 (1:1:1), NCM523 (5:2:3), NCM622 (6:2:2), NCM811 (8:1:1), or a combination thereof.

Meanwhile, in a full cell in which a cathode active material other than NCM811 (8:1:1) is used or NCM811 (8:1:1) is combined with another cathode active material, the voltage regions in which Peak A and Peak B are observed during the ICA analysis may change.

In one embodiment of the present disclosure, the ICA may be performed by first differentiating the discharge curve using a finite difference method to obtain dQ/dV data, and then applying a moving average filter to remove noise by processing 20 consecutive data points for each voltage step.

Based on the discharge curve data obtained during the first charge-discharge cycle, a normalized incremental capacity function ($f(V_1)$) with respect to an initial discharge capacity ($Q_0$) may be calculated using the following Equation 3:

[Equation 3]

$$f(V_1) = -\frac{1}{Q_0} \times \frac{Q_2 - Q_1}{V_2 - V_1} \; [\frac{1}{V}],$$

In Equation 3 above, Q and V represent capacity and voltage data, respectively, $Q_0$ represents the initial discharge capacity, and f corresponds to dQ/dV data (differential value of capacity with respect to voltage).

Equation 3 above represents a process in which the voltage-capacity variation between two adjacent data points, (Q1, V1) and (Q2, V2), is calculated using finite difference. Thereafter, a scaling factor of $-1/Q_0$ is applied to normalize the resulting dQ/dV data.

However, in practical measurements, noise may arise from instrument interference or parasitic side reactions. To mitigate such noise and obtain a smoother differential capacity curve, a moving average filter as expressed in the following Equation 4 may be applied.

[Equation 4]

$$f_{i,filtered} = average\,(f_{i-N+1}, f_{i-N+2}, \cdots, f_i)$$

In Equation 4 above, N represents the size of the moving average filter size. When filtering the i-th data point, the arithmetic mean of the values f from i-N+1 to i is calculated. However, in an initial data region where a sufficient number of previous f values are not yet available, the average is computed using only the available f values.

By applying Equation 4 above, the crystalline-amorphous transition point of the anode active material (Peak B) and the reference peak of the cathode active material (Peak A) may be identified much more clearly. Furthermore, long-term cycling characteristics, such as volume expansion suppression behavior or stability of SEI formation, may be evaluated in a more objective and reproducible manner.

In one embodiment of the present disclosure, the anode active material may include a metal-containing particle and a carbon material. The metal-containing particle may include at least one selected from the group consisting of Si, Al, Sn, Ge, Pb, In, As, Sb, P, and Ag.

For example, the metal-containing particle may include at least one selected from the group consisting of Si, Al, Sn, and Ag.

In one embodiment of the present disclosure, the metal-containing particle may be a silicon (Si)-containing particle.

In one embodiment of the present disclosure, the metal-containing particle may include at least one selected from the group consisting of a silicon particle, a silicon oxide particle, a silicon carbide particle, and a silicon alloy particle.

Meanwhile, the metal-containing particle may be a silicon particle.

The silicon particle may be metallic or semiconducting powder applied as an anode active material in rechargeable batteries to achieve high energy density. During charge-discharge processes, silicon undergoes substantial volume expansion despite its high theoretical capacity, which requires compositing with a buffering material. The carbon material may serve both as an electrically conductive network and as a mechanical buffer matrix. Specifically, the carbon material mitigates electrode degradation caused by volume expansion of the silicon particle, and stabilize charge-discharge efficiency during repeated cycling.

In one embodiment of the present disclosure, the carbon material may include amorphous carbon, crystalline carbon, or a combination thereof.

The amorphous carbon may be carbon having a non-graphitic, disordered structure obtained, for example, by

heat-treating petroleum pitch or coal pitch. The amorphous carbon suppresses parasitic reactions between the electrolyte and the anode active material and facilitate SEI formation. Additionally, the crystalline carbon may be carbon having a highly ordered lattice structure, such as natural graphite or artificial graphite. The crystalline carbon provides high electrical conductivity and mechanical stability, thereby contributing to improved overall cycle life of the anode active material.

In one embodiment of the present disclosure, the amorphous carbon may include petroleum pitch, coal pitch, coke, carbon black, or a combination thereof.

In one embodiment of the present disclosure, the crystalline carbon may include natural graphite, artificial graphite, or a combination thereof.

In one embodiment of the present disclosure, when the total weight of the metal-containing particle, the amorphous carbon, and the crystalline carbon is defined as 100 wt% (based on the weight after carbonization), the weight ratio between the metal-containing particle, the amorphous carbon, and the crystalline carbon (weight of the metal-containing particle : weight of the amorphous carbon : weight of the crystalline carbon) may be 30 to 80 wt% : 20 to 50 wt% : 0 to 40 wt%.

Since the amorphous carbon may lose approximately 30% to 40% of its weight during heat treatment, whereas the metal-containing particle and crystalline carbon typically exhibit only about 0% to 1% weight loss, the composition ratio should be defined based on the carbonized residual weight (i.e., the weight remaining after heat treatment). This approach ensures that the final mixing ratio accurately reflects the actual material proportions in the anode active material.

For example, the weight ratio between the metal-containing particle, the amorphous carbon, and the crystalline carbon (weight of the metal-containing particle : weight of the amorphous carbon : weight of the crystalline carbon) may be 40 to 50 wt% : 20 to 30 wt% : 25 to 35 wt%, 65 to 75 wt% : 25 to 35 wt% : 0 to 5 wt%, or 55 to 60 wt% : 20 to 30 wt% : 10 to 20 wt%.

When the weight ratio between the metal-containing particle, the amorphous carbon, and the crystalline carbon exceeds the above-defined range, the metal content may become excessively high or insufficient. In such cases, suppression of volume expansion or formation of a stable interphase layer during the initial formation process may not proceed effectively. Additionally, when the mixing ratio between the amorphous carbon and the crystalline carbon is not properly maintained, electrical conductivity and structural buffering capability may be reduced, which in turn may lead to deterioration of long-term charge-discharge cycle stability.

In one embodiment of the present disclosure, the volumetric median particle diameter (hereinafter referred to as "Dv50") of the metal-containing particle may be 70 to 200 nm, and the Dv50 of the anode active material may be 2 to 20 μm.

For example, the Dv50 of the metal-containing particle may be 70 to 200 nm, preferably 80 to 120 nm, and the Dv50 of the anode active material may be 2 to 20 μm, preferably 3 to 15 μm.

When the Dv50 of the metal-containing particle exceeds the above-defined range, the internal lithium diffusion path length within each particle increases, potentially delaying crystalline-to-amorphous transition during the initial formation process. On the other hand, when the Dv50 falls below the above-defined range, the particles may become excessively fine, which may intensify parasitic reactions with the electrolyte and promote surface oxidation.

When the Dv50 of the anode active material exceeds the above-defined range, the distance from the surface to the inner core of the anode active material increases. Consequently, amorphization may proceed slowly, leading to deterioration of long-term charge-discharge performance. On the other hand, when the Dv50 falls below the above-defined range, the overall surface area within the electrode may increase excessively, resulting in unstable formation of SEI.

The Dv50 may be measured using a laser diffraction analysis method as follows. First, 0.1 g of a sample powder is added to 100 mL of 2-propanol, and the mixture is subjected to ultrasonic treatment for 5 minutes using an ultrasonic disperser to ensure uniform dispersion of particles. The dispersed sample is then introduced into a laser diffraction particle size analyzer, and the scattering light pattern generated upon irradiation with a laser beam is detected by sensors. The particle size distribution is then calculated using analysis software based on Mie scattering theory. The measurement is repeated three times under identical conditions, and the average particle size distribution obtained from the three measurements is adopted as final data. Here, the Dv50 is defined as the particle diameter corresponding to 50% cumulative volume in the volume-based particle size distribution.

In one embodiment of the present disclosure, with respect to a rechargeable lithium battery including the anode active material described herein, when charge-discharge cycling is performed 500 times at a current density of 1.0 C, the discharge capacity after the 500th cycle may be equal to or greater than 85% relative to the initial discharge capacity of the first cycle.

For example, the discharge capacity after the 500th cycle to the initial discharge capacity may be 85% to 99%, 86% to 99%, 87% to 95%, 85% to 87.8%, 87.8% to 88.5%, 88.5% to 90.1%, 90.1% to 90.5%, 90.5% to 92.4%, 92.4% to 99%, 85% to 88%, 88% to 90%, 90% to 90.3%, 90.3% to 92%, or 92% to 99%.

When the discharge capacity after the 500th cycle to the initial discharge capacity falls below the above-defined range, it may be interpreted that volume expansion suppression and SEI stabilization of the silicon anode active material have not been sufficiently achieved during long-term cycling, accelerating electrode degradation and capacity fading.

In one embodiment of the present disclosure, after the rechargeable lithium battery including the anode active material is subjected to 500 charge-discharge cycles, an anode electrode may be removed from the battery and subjected to differential scanning calorimetry (DSC) within a temperature range of 80°C to 200°C. In this case, an integrated heat value of equal to or less than 150 J/g may be obtained.

For example, the integrated heat value may be 100 to 150 J/g, 110 to 150 J/g, 120 to 150 J/g, 100 to 120.5 J/g, 120.5 to 122.7 J/g, 122.7 to 129.6 J/g, 129.6 to 140.3 J/g, 140.3 to 146.5 J/g, 146.5 to 150 J/g, 100 to 121 J/g, 121 to 130 J/g, 130 to 141 J/g, or 141 to 150 J/g.

When the integrated heat value exceeds the above-defined range, it may be interpreted that excessive electrolyte decomposition products or unstable SEIs have accumulated on the surface of the anode active material after 500 charge-discharge cycles. Such accumulation may accelerate capacity fading and electrode deterioration during long-term charge-discharge cycling.

In one embodiment of the present disclosure, the anode active material may not have a core-shell structure. That is, the anode active material may have a particle structure in which no distinct shell layer is formed on its surface.

A method for preparing the above-described anode active material according to one aspect of the present disclosure may include: a first step of preparing a precursor powder by spray-drying a solution containing a metal-containing particle; a second step of mixing and compositing the precursor powder with crystalline carbon and amorphous carbon; and a third step of heat-treating the composited powder.

The metal may include at least one selected from the group consisting of Si, Al, Ti, Mn, Ni, Cu, V, Zr, Co, Fe, and Nb.

In the first step, the internal chamber pressure may be maintained at 5.0 to 7.0 kPa.

For example, the metal may include at least one selected from the group consisting of Si, Al, Ti, Mn, Ni, and Fe.

For example, the internal chamber pressure may be maintained at 5.0 to 7.0 kPa, 5.2 to 6.8 kPa, 5.4 to 6.6 kPa, 5.0 to 5.5 kPa, 5.5 to 6.5 kPa, 6.5 to 7.0 kPa, 5.0 to 6.0 kPa, or 6.0 to 7.0 kPa.

When the internal chamber pressure exceeds the above-defined range, the spray-drying rate may become excessively slow. In such cases, inter-particle aggregation or microstructural cracking may occur, potentially leading to deterioration of electrochemical performance and long-term stability of the anode active material. On the other hand, when the internal chamber pressure falls below the above-defined range, solvent evaporation and spray-drying may proceed too rapidly. In such cases, the precursor particle morphology may become non-uniform. As a result, during subsequent compositing, silicon particles may not undergo uniform amorphization, and carbon coating may become uneven.

In the method for preparing the anode active material according to one embodiment of the present disclosure, the precursor powder may have a volumetric median particle diameter (Dv50) of 2.0 to 20 μm.

For example, the Dv50 of the precursor powder may be 2.0 to 20 μm, 3.0 to 18 μm, 3.0 to 15 μm, 2.0 to 5.0 μm, 5.0 to 7.5 μm, 7.5 to 9.5 μm, 9.5 to 20 μm, 2.0 to 6.0 μm, 6.0 to 9.0 μm, or 9.0 to 20 μm.

When the Dv50 of the precursor powder falls below the above-defined range, the particles produced during the spray-drying process may become excessively fine. In such cases, particle aggregation may intensify during subsequent mixing and heat treatment, and amorphization of silicon may proceed non-uniformly. On the other hand, when the Dv50 exceeds the above-defined range, uniform dispersion of the carbon material within the precursor may be difficult to achieve, and long-term charge-discharge performance may deteriorate.

In the method for preparing the anode active material according to one embodiment of the present application, the metal-containing particle may include metal grade silicon, industrial-grade silicon, foundry-grade silicon, or a combination thereof.

For example, the metal-containing particle may be metal grade silicon.

In the method for preparing the anode active material according to one embodiment of the present disclosure, the solution used for spray drying may include an alcohol-based solvent. The alcohol-based solvent may include methanol, ethanol, 1-propanol, 2-propanol, 1-butanol, 2-butanol, isobutanol, tert-butanol, or a combination thereof.

For example, the alcohol-based solvent may include methanol, ethanol, 1-propanol, 2-propanol, or a combination thereof.

In the method for preparing the anode active material according to one embodiment of the present disclosure, after completion of the third step, when the total weight of the precursor powder, the amorphous carbon, and the crystalline carbon is defined as 100 wt% (based on the weight after carbonization), the weight ratio between the precursor powder, the amorphous carbon, and the crystalline carbon (weight of the precursor powder : weight of the amorphous carbon : weight of the crystalline carbon) may be 30 to 80 wt% : 20 to 50 wt% : 0 to 40 wt%.

For example, the weight ratio between the precursor powder, the amorphous carbon, and the crystalline carbon (weight of the precursor powder : weight of the amorphous carbon : weight of the crystalline carbon) may be 40 to 50 wt% : 20 to 30 wt% : 25 to 35 wt%, 65 to 75 wt% : 25 to 35 wt% : 0 to 5 wt%, or 55 to 60 wt% : 20 to 30 wt% : 10 to 20 wt%.

When the weight ratio between the precursor powder, the amorphous carbon, and the crystalline carbon exceeds the above-defined range, silicon and carbon may not be properly distributed within the composite structure. As a result, the specific surface area may increase excessively or agglomeration among carbon sources may occur, which may hinder

effective suppression of volume expansion and stable interphase formation during the initial formation process. Additionally, when the mixing ratio between the amorphous carbon and the crystalline carbon is not appropriately maintained, electrical conductivity and structural buffering capability may be reduced. Consequently, long-term charge-discharge cycle stability may deteriorate.

An electrode according to another aspect of the present disclosure may include the above-described anode active material. A rechargeable lithium battery may include the electrode including the anode active material as an anode; a cathode positioned opposite to the anode; and an electrolyte disposed between the anode and the cathode.

The anode includes the anode active material and, for example, may be prepared by mixing the anode active material, a binder, and optionally a conductive agent in a solvent to form an anode active material composition, followed by molding the composition into a predetermined shape or coating the composition onto a current collector such as a copper foil.

In addition to the anode active material described above, the anode may further include an anode active material commonly used in the art for lithium batteries. Such a commonly used anode active material may include, for example, at least one selected from the group consisting of lithium metal, a lithium-alloyable metal, a transition metal oxide, a non-transition metal oxide, and a carbonaceous material.

For example, the lithium-alloyable metal may include Si, Sn, Al, Ge, Pb, Bi, Sb, an Si-Y alloy (where Y is an alkali metal, an alkaline earth metal, a Group 13 element, a Group 14 element, a transition metal, a rare earth element, or a combination thereof, and is not Si), or an Sn-Y alloy (where Y is an alkali metal, an alkaline earth metal, Group 13 to Group 16 elements, a transition metal, a rare earth element, or a combination thereof, and is not Sn). The element Y may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

For example, the transition metal oxide may include lithium titanate, vanadium oxide, lithium vanadium oxide, or the like.

For example, the non-transition metal oxide may include $SnO_2$, SiOx ($0<x\leq2$), or the like. The carbonaceous material may include crystalline carbon, amorphous carbon, or a mixture thereof. The crystalline carbon may include graphite having an amorphous, plate-like, flake, spherical, or fibrous morphology, such as natural graphite or artificial graphite. The amorphous carbon may include soft carbon (low-temperature calcined carbon), hard carbon, mesophase pitch carbon, calcined coke, or the like.

When the anode active material is used together with the carbonaceous material, oxidation reactions of the silicon-based active material may be suppressed. Additionally, a stable SEI layer may be effectively formed, and electrical conductivity may be improved, thereby enhancing lithium charge-discharge characteristics.

The commonly used anode active material described above may be blended with the anode active material of the present disclosure, coated on the surface thereof, or used in any other suitable combined form.

The binder used in the anode active material composition serves to promote binding between the anode active material and a conductive agent, as well as adhesion to a current collector. The binder may be added in an amount of 1 to 50 parts by weight based on 100 parts by weight of the anode active material. For example, the binder may be added in an amount of 1 to 30 parts by weight, 1 to 20 parts by weight, or 1 to 15 parts by weight based on 100 parts by weight of the anode active material.

The binder may include, for example, polyvinylidene fluoride (PVDF), polyvinylidene chloride, polybenzimidazole, polyimide, polyvinyl acetate, polyacrylonitrile, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polystyrene, polymethyl methacrylate, polyaniline, acrylonitrile-butadiene-styrene, phenolic resin, epoxy resin, polyethylene terephthalate, polytetrafluoroethylene, polyphenylene sulfide, polyamide-imide, polyetherimide, polyethylene sulfone, polyamide, polyacetal, polyphenylene oxide, polybutylene terephthalate, ethylene-propylene-diene terpolymer (EPDM), sulfonated EPDM, styrene-butadiene rubber, fluoro rubber, or various copolymers thereof.

The anode may further include a conductive agent in order to provide an effective electron transport pathway within the anode active material and thereby improve electrical conductivity of the anode active material.

The conductive agent may be any conductive material commonly used in lithium batteries, and may include, for example, a carbonaceous material, such as carbon black, acetylene black, Ketjen black, or carbon fiber (e.g., vapor-grown carbon fibers); a metal-based material, such as metal powder or metal fiber of copper, nickel, aluminum, silver, or the like; a conductive polymer, such as a polyphenylene derivative; or a mixture thereof. The amount of the conductive agent may be appropriately adjusted. For example, the weight ratio of the anode active material to the conductive agent may be 99:1 to 90:10.

The solvent may include N-methyl-2-pyrrolidone (NMP), acetone, water, or the like. The solvent may be used in an amount of 1 to 10 parts by weight based on 100 parts by weight of the anode active material. When the amount of the solvent falls within the above-defined range, formation of a uniform active material layer is facilitated.

Additionally, the current collector may have a thickness of 3 to 500 $\mu$m. The current collector is not particularly limited as long as it has electrical conductivity without causing chemical changes in the battery. The current collector may

include, for example, copper, stainless steel, aluminum, nickel, titanium, calcined carbon, copper or stainless steel surface-treated with carbon, nickel, titanium, silver, or the like, or an aluminum-cadmium alloy.

Additionally, the current collector may have fine surface irregularities formed thereon to enhance adhesion strength with the anode active material, and may be used in various forms, such as a film, a sheet, a foil, a net, a porous body, a foam, or a nonwoven fabric.

The prepared anode active material composition may be directly coated onto the current collector to form an anode electrode plate. Alternatively, the composition may be cast onto a separate support, and the resulting anode active material film may be peeled off from the support and laminated onto a copper foil current collector to obtain an anode electrode plate. The anode is not limited to the above-described forms and may be fabricated in other suitable forms.

In addition to being used for manufacturing electrodes of rechargeable lithium batteries, the anode active material composition may also be printed onto a flexible electrode substrate and applied to the fabrication of printable batteries.

Separately, in order to manufacture a cathode, a cathode active material composition may be prepared by mixing a cathode active material, a conductive agent, a binder, and a solvent.

The cathode active material may be a lithium-containing metal oxide, and any material commonly used in the art may be used without particular limitation.

For example, the cathode active material may include a compound represented by any one of the following chemical formulae: $Li_aA_{1-b}B_bD_2$ (where $0.90 \leq a \leq 1.8$ and $0 \leq b \leq 0.5$); $Li_aE_{1-b}B_bO_{2-c}D_c$ (where $0.90 \leq a \leq 1.8$, $0 \leq b \leq 0.5$, and $0 \leq c \leq 0.05$); $LiE_{2-b}B_bO_{4-c}D_c$ (where $0 \leq b \leq 0.5$ and $0 \leq c \leq 0.05$); $Li_aNi_{1-8-c}Co_bB_cD_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_cD_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB_cO_{2-\alpha}F_\alpha$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMnG_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the above formulae: A represents Ni, Co, Mn, or a combination thereof; B represents Al, Ni, Co, Mn, Cr, Fe, Mg, Sr, V, a rare earth element, or a combination thereof; D represents O, F, S, P, or a combination thereof; E represents Co, Mn, or a combination thereof; F represents F, S, P, or a combination thereof; G represents Al, Cr, Mn, Fe, Mg, La, Ce, Sr, V, or a combination thereof; Q represents Ti, Mo, Mn, or a combination thereof; I represents Cr, V, Fe, Sc, Y, or a combination thereof; and J represents V, Cr, Mn, Co, Ni, Cu, or a combination thereof.

Of course, these compounds may have a coating layer on the surfaces thereof, or may be mixed with a compound having a coating layer. The coating layer may include a coating element compound selected from an oxide, a hydroxide, an oxyhydroxide, an oxycarbonate, or a hydroxycarbonate of the coating element. The compounds constituting the coating layer may be amorphous or crystalline. The coating element contained in the coating layer may include Mg, Al, Co, K, Na, Ca, Si, Ti, V, Sn, Ge, Ga, B, As, Zr, or a mixture thereof. The coating layer may be formed by any suitable method (e.g., spray coating, dipping) that does not adversely affect the physical properties of the cathode active material, or other conventional coating techniques known in the art. Since such coating methods are well understood by those skilled in the art, detailed descriptions thereof are omitted.

For example, $LiNiO_2$, $LiCoO_2$, $LiMn_xO_{2x}$(x=1, 2), $LiNi_{1-x}Mn_xO_2$ ($0<x<1$), $LiNi_{1-x-y}Co_xMn_yO_2$ ($0 \leq x \leq 0.5$, $0 \leq y \leq 0.5$), $LiFeO_2$, $V_2O_5$, TiS, MoS, or the like may be used as the cathode active material.

In the cathode active material composition, the conductive agent, the binder, and the solvent may be the same as those described above for the anode active material composition. In some cases, a plasticizer may be further added to the cathode active material composition and/or the anode active material composition to form pores within an electrode plate. The amounts of the cathode active material, the conductive additive, the binder, and the solvent may be determined within ranges commonly used in lithium batteries.

The cathode current collector may have a thickness of 3 to 500 μm and is not particularly limited as long as it exhibits high electrical conductivity without causing chemical changes in the battery. The cathode current collector may include, for example, stainless steel, aluminum, nickel, titanium, calcined carbon, or aluminum or stainless steel surface-treated with carbon, nickel, titanium, silver, or the like. The current collector may have fine surface irregularities formed thereon to enhance adhesion with the cathode active material, and may be used in various forms, such as a film, a sheet, a foil, a net, a porous body, a foam, or a nonwoven fabric.

The prepared cathode active material composition may be directly coated onto the cathode current collector and dried to fabricate a cathode electrode plate. Alternatively, the cathode active material composition may be cast onto a separate support, and the resulting film may be peeled from the support and laminated onto the cathode current collector to obtain a cathode electrode plate.

The cathode and the anode may be separated by a separator. Any separator commonly used in lithium batteries

may be used. In particular, a separator having low resistance to ionic transport of electrolyte and excellent electrolyte wettability is preferred. For example, the separator may be formed from glass fiber, polyester, Teflon, polyethylene, polypropylene, polytetrafluoroethylene (PTFE), or a combination thereof, and may be in the form of a nonwoven fabric or a woven fabric. The separator may have a pore diameter of 0.01 to 10 μm and a thickness of 5 to 300 μm.

A lithium salt-containing non-aqueous electrolyte consists of a non-aqueous electrolyte and a lithium salt. The non-aqueous electrolyte may include a non-aqueous liquid electrolyte solution, an organic solid electrolyte, or an inorganic solid electrolyte.

The non-aqueous liquid solution may include, for example, an aprotic organic solvent such as N-methyl-2-pyrrolidone, propylene carbonate, ethylene carbonate, butylene carbonate, dimethyl carbonate, diethyl carbonate, γ-butyrolactone, 1,2-dimethoxyethane, tetrahydrofuran, 2-methyltetrahydrofuran, dimethyl sulfoxide, 1,3-dioxolane, formamide, dimethylformamide, acetonitrile, nitromethane, methyl formate, methyl acetate, triester phosphate, trimethoxymethane, dioxolane derivative, sulfolane, methyl sulfolane, 1,3-dimethyl-2-imidazolidinone, propylene carbonate derivative, tetrahydrofuran derivative, ether, methyl propionate, ethyl propionate, or the like.

The organic solid electrolyte may include, for example, a polyethylene derivative, a polyethylene oxide derivative, a polypropylene oxide derivative, a phosphate ester polymer, a polyagitation lysine, a polyester sulfide, a polyvinyl alcohol, a polyvinylidene fluoride, or a polymer containing an ionic dissociation group.

The inorganic solid electrolyte may include, for example, lithium nitride, halide, or sulfate of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, or $Li_3PO_4$-$Li_2S$-$SiS_2$.

The lithium salt may be any lithium salt commonly used in lithium batteries and preferably one that is readily soluble in the non-aqueous electrolyte. The lithium salt may include, for example, at least one of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lower aliphatic lithium carbonate, lithium 4-phenylborate, and imide.

Rechargeable lithium batteries may be classified as a lithium ion battery, a lithium ion polymer battery, and a lithium polymer battery depending on the type of separator and electrolyte used. They may also be classified depending on shape, such as cylindrical, prismatic, coin-type, and pouch-type, and depending on size, such as bulk-type or thin-film type.

Since methods for manufacturing such batteries are well known in the art, detailed descriptions thereof are omitted.

Hereinafter, the present disclosure will be described in more detail with reference to Examples. However, the following Examples are provided for illustrative purposes merely to further explain the present disclosure, and the scope of the present disclosure is not limited thereto.

## Examples and Comparative Examples: Preparation of Anode Active Material and Full Cell (Pouch Cell)

### [Example 1]

### Preparation of Silicon Precursor Powder

Based on 100 wt% of the total mixture (the entire mixed solution prepared for milling), 1 wt% of metal-grade silicon (MGS) and 10 wt% of 2-propanol were introduced into a bead mill and subjected to a milling process. After completion of the milling process, the resulting mixture was transferred to a spray dryer. The internal chamber pressure was maintained at 4.5 kPa. At this time, the target pressure was achieved by adjusting the inlet gas temperature, internal blower speed, and exhaust flow rate. As a result, a silicon precursor powder having a volumetric median particle diameter (Dv50) of approximately 5 μm was obtained.

### Preparation of Anode Active Material (Silicon-Carbon Composite)

The silicon precursor powder, petroleum pitch, and graphite were blended at a weight ratio of 5:4:1, based on the weight after carbonization. The mixture was introduced into a coater (e.g., a rotary coater), where a coating process was carried out for approximately 20 minutes. The petroleum pitch used herein had a softening point of approximately 200°C.

After completion of the coating process, the coated powder was subjected to heat treatment at 900°C to induce carbonization, resulting in the formation of a silicon-carbon composite. Following heat treatment, the carbonized powder was sieved through a 400-mesh screen. The classified powder was then used as a final anode active material.

### Preparation of Anode Electrode Plate

An anode active material slurry was prepared by kneading the following components: 15 wt% of the anode active material prepared above, 80 wt% of natural graphite, 2 wt% of a carbon fiber conductive agent, 1.5 wt% of carboxymethyl

cellulose (CMC), and 1.5 wt% of styrene-butadiene rubber (SBR).

Subsequently, the slurry was coated onto a copper (Cu) current collector and dried. The dried electrode was then pressed to achieve a composite density of 1.55 g/cc. The resulting sheet was used as an anode electrode plate.

**Preparation of Cathode Electrode Plate**

A cathode active material slurry was prepared by mixing 96 wt% of a nickel-cobalt-manganese (NCM)-based cathode active material, 2 wt% of acetylene black, and 2 wt% of polyvinylidene fluoride (PVdF) in N-methyl-2-pyrrolidone (NMP) solvent.

Subsequently, the slurry was coated onto an aluminum (Al) current collector and dried. The dried electrode was then pressed to achieve a composite density of 3.2 g/cc. The resulting sheet was used as a cathode electrode plate.

**Fabrication of Full Cell (Pouch Cell)**

Six sheets of the anode (electrode area: 13.00 $cm^2$) and six sheets of the cathode (electrode area: 12.30 $cm^2$) were prepared. The electrodes were alternately stacked with separators interposed therebetween to form a pouch-type cell configuration. At this time, the capacity ratio of the anode to the cathode (N/P ratio) was set to 1.1.

Subsequently, an electrolyte was prepared by dissolving 1.0 M $LiPF_6$ and 5 wt% fluoroethylene carbonate (FEC) in a mixed solvent of ethylene carbonate (EC) and diethyl carbonate (DEC) at a volume ratio of 3:7. The electrolyte was injected at 5.0 g/Ah into the electrode assembly. Finally, a pouch film was thermally compressed (heat-sealed) to complete a 6-stack pouch cell.

**[Example 2]**

The same procedure as in Example 1 was carried out, except that the Dv50 of the silicon precursor powder was adjusted to 7.5 μm and the internal chamber pressure during spray drying was adjusted to 5.5 kPa.

**[Example 3]**

The same procedure as in Example 1 was carried out, except that the internal chamber pressure during spray drying was adjusted to 5.5 kPa.

**[Example 4]**

The same procedure as in Example 1 was carried out, except that the Dv50 of the silicon precursor powder was adjusted to 7.5 μm and the internal chamber pressure during spray drying was adjusted to 6.5 kPa.

**[Example 5]**

The same procedure as in Example 1 was carried out, except that the internal chamber pressure during spray drying was adjusted to 6.5 kPa.

**[Comparative Example 1]**

The same procedure as in Example 1 was carried out, except that the Dv50 of the silicon precursor powder was adjusted to 12.5 μm.

**[Comparative Example 2]**

The same procedure as in Example 1 was carried out, except that the Dv50 of the silicon precursor powder was adjusted to 10 μm.

**[Comparative Example 3]**

The same procedure as in Example 1 was carried out, except that the Dv50 of the silicon precursor powder was adjusted to 7.5 μm.

For Examples 1 to 5 and Comparative Examples 1 to 3, the Dv50 of the silicon precursor powder and the internal chamber pressure during spray drying are summarized in Table 1 below.

Table 1

| Classification | Silicon precursor powder Dv50 (μm) | Spray drying chamber internal pressure (kPa) |
|---|---|---|
| Example 1 | 5 | 4.5 |
| Example 2 | 7.5 | 5.5 |
| Example 3 | 5 | 5.5 |
| Example 4 | 7.5 | 6.5 |
| Example 5 | 5 | 6.5 |
| Comparative Example 1 | 12.5 | 4.5 |
| Comparative Example 2 | 10 | 4.5 |
| Comparative Example 3 | 7.5 | 4.5 |

**[Evaluation Example]**

**Evaluation Example 1: ICA Curve Data Analysis**

For the completed rechargeable lithium batteries (full cells) of Examples 1 to 5 and Comparative Examples 1 to 3, a formation process was conducted within a voltage range of 2.75 to 4.2 V at a current density of 0.1 C. After the formation process, discharge data was obtained. During the discharge step (corresponding to delithiation of the anode active material), voltage and capacity data were recorded at predetermined intervals.

Subsequently, based on the discharge data, the voltage-capacity variation between two adjacent data points, ($Q_1$, $V_1$) and ($Q_2$, $V_2$), was calculated using a finite difference method in accordance with Equation 3 described above. Thereafter, a scaling factor of $-1/Q_0$ was applied to normalize the resulting dQ/dV data.

Following normalization, noise removal was performed by applying a moving average filter to 20 consecutive data points at each voltage step, in accordance with Equation 4 described above.

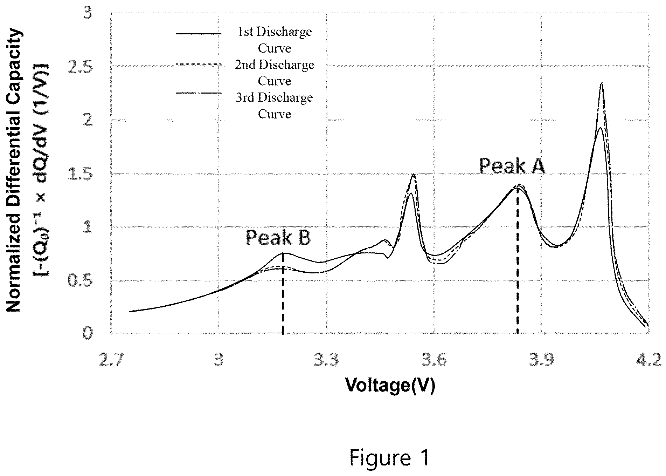

FIG. 1 is a graph illustrating normalized dQ/dV data obtained at each discharge step during an initial formation process (a total of three charge-discharge cycles) for Example 3. The horizontal axis represents voltage (V), and the vertical axis represents $-(Q_0)^{-1} \times dQ/dV$ (1/V). The curves correspond to the first, second, and third discharge cycles, respectively.

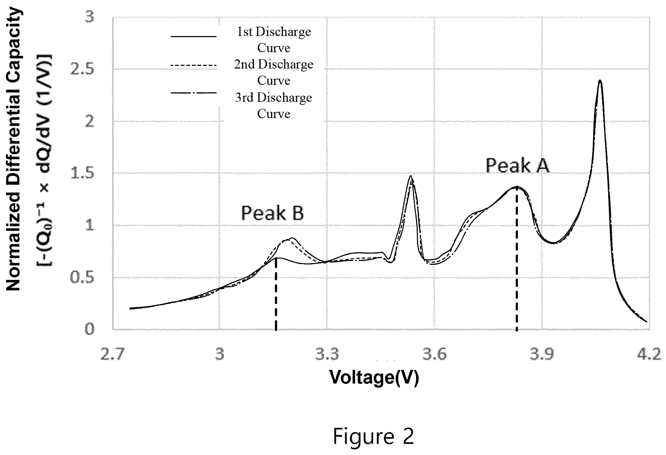

FIG. 2 is a graph illustrating normalized dQ/dV data obtained at each discharge step during an initial formation process (a total of three charge-discharge cycles) for Comparative Example 2. The horizontal axis represents voltage (V), and the vertical axis represents $-(Q_0)^{-1} \times dQ/dV$ (1/V). The curves correspond to the first, second, and third discharge cycles, respectively.

In FIGS. 1 and 2, Peak A (observed in a voltage region of 3.7 to 3.9 V) corresponds to a peak formed in a cathode voltage region. Since there is no significant difference among the curves for different cycles in this region, Peak A is suitable for use as a reference peak. On the contrary, Peak B (observed in a voltage region of 3.1 to 3.25 V) corresponds to a region that reflects the crystallinity of the silicon anode active material. As the formation process proceeds through repeated cycles, the transition of silicon from a crystalline phase to an amorphous phase can be identified through changes in this peak. The degree of variation in Peak B across the discharge curves provides indirect evidence for evaluating suppression of silicon volume expansion and stability of SEI.

For Examples 1 to 5 and Comparative Examples 1 to 3, the $\alpha$, $\beta$, and $\beta/\alpha$ values calculated according to Equation 1 and Equation 2 described above are summarized in Table 2 below.

Table 2

| Classification | Comparative Example 1 | Comparative Example 2 | Comparative Example 3 | Example 1 |
|---|---|---|---|---|
| $\alpha$ * 100 (%) | 50.1 | 50.5 | 50.5 | 50.3 |
| $\beta$ * 100 (%) | 65.2 | 63.9 | 60.2 | 49.1 |
| $\beta/\alpha$ (%) | 130.1 | 126.6 | 119.2 | 97.6 |
| Classification | Example 2 | Example 3 | Example 4 | Example 5 |
| $\alpha$ * 100 (%) | 55.3 | 54.4 | 57.3 | 58.0 |
| $\beta$ * 100 (%) | 55.0 | 43.0 | 51.7 | 42.5 |

(continued)

| Classification | Example 2 | Example 3 | Example 4 | Example 5 |
|---|---|---|---|---|
| $\beta/\alpha$ (%) | 99.5 | 79.0 | 90.2 | 73.3 |

As shown in Table 2, Examples 1 to 5, unlike Comparative Examples 1 to 3, satisfy $\beta \leq 0.6$, and also satisfy $\beta/\alpha \leq$ 100%.

Additionally, among Examples 1 to 5, Example 5 exhibits the lowest values for $\beta$ and $\beta/\alpha$, at 0.425% and 73.3%, respectively.

A more detailed interpretation of the results in Table 2 reveals that the $\beta/\alpha$ value tends to increase as the size of the silicon-carbon composite increases. Here, Peak B may be interpreted as an indicator reflecting the crystallinity of the silicon anode active material, amorphization proceeds sequentially from the silicon located at the outermost region of the composite toward the silicon present in the central core. As the composite particle size increases, variation in the rate at which amorphization progresses toward the core becomes more pronounced, which leads to an increase in the $\beta/\alpha$ value.

Meanwhile, as the internal chamber pressure during spray drying increases, a tendency for the $\beta/\alpha$ value to increase is also observed. This behavior is considered to be related to the degree of sphericity of silicon precursor particles prior to spray drying. The internal chamber pressure may be set by adjusting parameters such as inlet gas temperature, internal blower speed, and exhaust flow rate. At higher pressures, particles remain within the chamber for a longer residence time, leading to slower solvent evaporation and promoting formation of more spherical precursor particles. When the precursor is spherical, carbon coating proceeds isotropically during the compositing process. However, when dimples are present on the precursor surface, carbon accumulates preferentially in those recessed regions. Since carbon has lower electrical resistance than silicon, carbon-rich dimples form electrically favorable pathways during charge and discharge. Consequently, in final products containing numerous dimples, amorphization of the silicon anode active material tends to initiate locally near the dimple regions and proceed directionally rather than uniformly. This directional progression may hinder homogeneous amorphization throughout the entire anode active material.

**Evaluation Example 2: Capacity Retention Evaluation**

For Examples 1 to 5 and Comparative Examples 1 to 3, capacity retention performance was evaluated as follows. First, the cells were subjected to three charge-discharge cycles at 25°C under the following conditions: charge cut-off voltage: 4.2 V, discharge cut-off voltage: 2.75 V, and current density: 0.1 C. After completing three charge-discharge cycles, a degassing process was performed. All charging processes were performed under a constant current-constant voltage (CC-CV) mode. Specifically, the cells were charged at a constant current of 0.1 C until the voltage reached 4.2 V. Discharging was performed under a constant current (CC) mode. At this time, the discharge termination current was set to 0.005 C.

Subsequently, the cells were cycled at: current density: 1.0 C, voltage range: 2.75 to 4.2 V, and total number of cycles: 500. The ratio between the discharge capacity at the 1st cycle and the discharge capacity at the 500th cycle was defined as the capacity retention (%). The capacity retention was calculated according to the following Equation 5:

$$\text{Capacity retention [\%]} = [\text{discharge capacity at 500th cycle}/\text{discharge capacity at 1st cycle}] \times 100 \qquad \text{[Equation 5]}$$

The calculated capacity retention values for Examples 1 to 5 and Comparative Examples 1 to 3 are summarized in Table 3 below.

Table 3

| Classification | Capacity retention (%) |
|---|---|
| Example 1 | 88.5 |
| Example 2 | 87.8 |
| Example 3 | 90.5 |
| Example 4 | 90.1 |
| Example 5 | 92.4 |
| Comparative Example 1 | 76.5 |
| Comparative Example 2 | 80.5 |

(continued)

| Classification | Capacity retention (%) |
|---|---|
| Comparative Example 3 | 81.5 |

As shown in Table 3, Examples 1 to 5, unlike Comparative Examples 1 to 3, exhibit a capacity retention of 87% or higher.

Additionally, among Examples 1 to 5, Example 5 shows a highest capacity retention of 92.4%.

When the results of Table 3 are interpreted in conjunction with the results of Table 2, it can be inferred that when amorphization of silicon proceeds rapidly during the initial formation process, additional amorphization during subsequent cycles is minimized. As a result, SEI rupture caused by repeated volume expansion is mitigated, enabling the anode active material to form a more stable SEI and thereby improving cycle life performance.

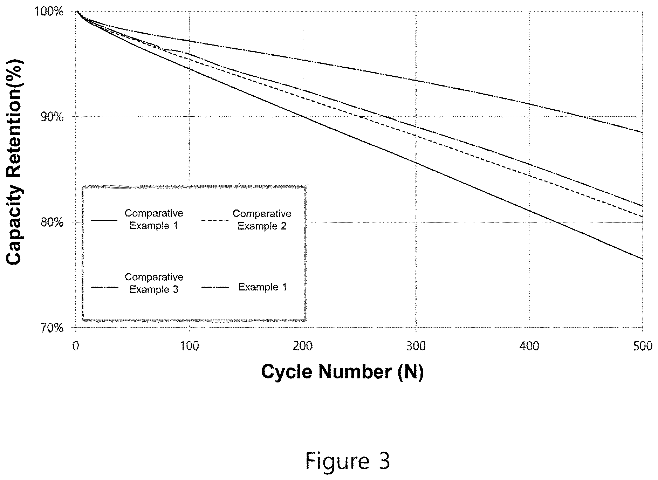

FIG. 3 is a graph illustrating a comparison of the capacity retention (%) after 1 to 500 charge-discharge cycles for Comparative Examples 1 to 3 and Example 1, in which the silicon-carbon composite particle size was varied. In FIG. 3, the horizontal axis represents the number of charge-discharge cycles, and the vertical axis represents the capacity retention (%).

As shown seen in FIG. 3, as the silicon-carbon composite particle size decreases (from 12.5 to 5 μm), higher capacity retention is maintained even after long-term cycling. This behavior is interpreted as resulting from effective suppression of volume expansion of the silicon anode active material due to composite particle size reduction, as well as the formation of a stable SEI during the initial formation process, thereby improving charge-discharge cycle life performance.

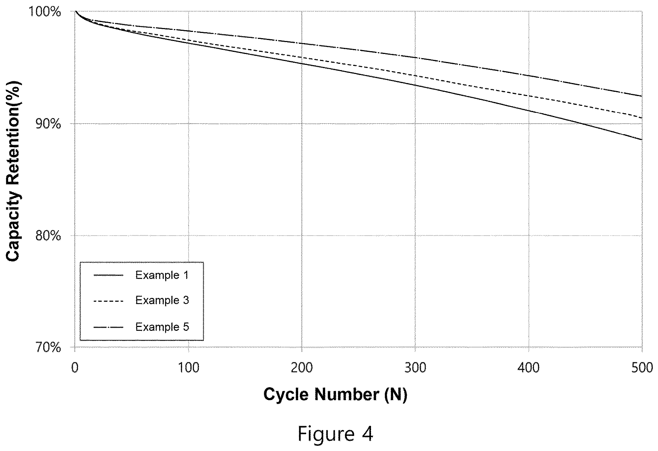

FIG. 4 is a graph illustrating a comparison of the capacity retention (%) after 1 to 500 cycles for Examples 1, 3, and 5, in which the composite particle size was fixed at 5 μm while the internal chamber pressure during spray drying was varied.

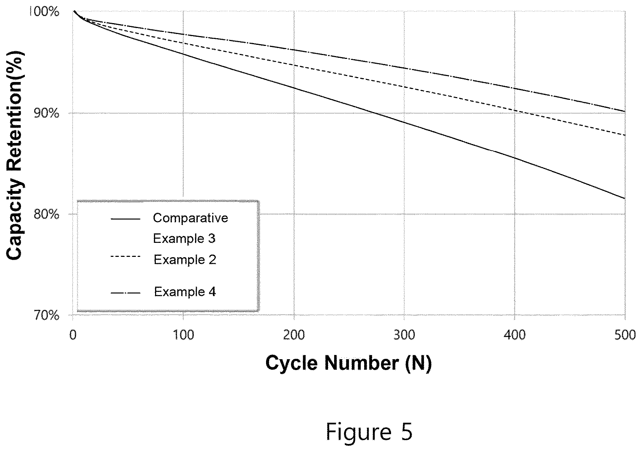

FIG. 5 is a graph illustrating a comparison of the capacity retention (%) after 1 to 500 cycles for Comparative Example 3, Example 2, and Example 4, in which the composite particle size was fixed at 7.5 μm while the internal chamber pressure during spray drying was varied.

In FIGS. 4 and 5, the horizontal axis represents the number of charge-discharge cycles, and the vertical axis represents the capacity retention (%).

As shown in FIGS. 4 and 5, as the chamber pressure increases, the silicon precursor particles tend to be formed closer to a spherical morphology, and silicon amorphization proceeds more uniformly. Consequently, higher capacity retention is maintained even after prolonged cycling. This improvement is considered to result from optimization of the spray-drying pressure conditions, which more effectively suppress volume expansion of the silicon anode active material.

## Evaluation Example 3: Differential Scanning Calorimetry (DSC) Analysis

For Examples 1 to 5 and Comparative Examples 1 to 3, after completing 500 charge-discharge cycles, each rechargeable battery was disassembled and the anode electrode plate was removed. Differential scanning calorimetry (DSC) analysis was then performed over a temperature range of 80°C to 200°C. The DSC measurement was conducted under a nitrogen atmosphere, and the temperature was increased at a heating rate of 5°C/min to evaluate the thermal behavior of samples. From the obtained DSC thermogram, the integrated heat release value (heat of reaction) was calculated.

Table 4 below summarizes the DSC results obtained from powders obtained from the cells of Examples 1 to 5 and Comparative Examples 1 to 3 after completion of the 500-cycle life test. Specifically, after finishing the 500 charge-discharge cycles, each cell was disassembled and subjected to drying and washing in a dry-room environment. Subsequently, the current collector was removed from the anode electrode plate to obtain a powder sample. This evaluation method is generally used to quantitatively assess a solid electrolyte interphase (SEI) layer formed on the surface of the anode. The degree of SEI formation is inferred by integrating the heat evolved below 200°C in the DSC curve.

Table 4

| | Comparative Example 1 | Comparative Example 2 | Comparative Example 3 | Example 1 |
|---|---|---|---|---|
| DSC (J/g) | 165.3 | 158.6 | 155.3 | 140.3 |
| | Example 2 | Example 3 | Example 4 | Example 5 |
| DSC (J/g) | 146.5 | 122.7 | 129.6 | 120.5 |

As shown in Table 4, Examples 1 to 5, unlike Comparative Examples 1 to 3, exhibit a DSC of 150 J/g or less.

Additionally, among Examples 1 to 5, Example 2 shows a highest DSC of 146.5 J/g, while Example 5 shows a lowest DSC of 120.5 J/g.

When the results of Table 4 are interpreted in conjunction with the results of Tables 2 and 3, it can be inferred that silicon-containing anode active materials undergo repeated volume expansion and contraction during charge-discharge cycling, which promotes repeated formation and rupture of the SEI layer, potentially accelerating electrode degradation. In particular, when silicon transitions from a crystalline phase to an amorphous phase, a more significant volume change occurs. As described above, a smaller $\beta/\alpha$ value suggests that silicon amorphization proceeds more rapidly, leading to stabilization of the SEI layer formed thereafter.

The scope of the present disclosure is defined by the appended claims rather than the above detailed description, and all changes or modifications derived from the meaning and range of the appended claims and equivalents thereof are to be interpreted as being included within the scope of present disclosure.

## Claims

**1.** An anode active material, wherein when a discharge curve of a third charge-discharge cycle during a formation process, measured by incremental capacity analysis (ICA), is converted into a differential capacity versus voltage curve (dQ/dV) by normalizing the discharge curve with respect to an initial discharge capacity of each cell, and when a ratio of a maximum peak height observed in a voltage region of 3.0 to 3.3 V to a maximum peak height observed in a voltage region of 3.6 to 4.0 V ((maximum peak height in the voltage region of 3.0 to 3.3 V/maximum peak height in the voltage region of 3.6 to 4.0 V) * 100) is defined as $\beta$, the $\beta$ is equal to or less than 60%,
wherein the ICA is performed on a full cell including the anode active material.

**2.** The anode active material of claim 1, wherein a discharge curve of a first charge-discharge cycle during the formation process, measured by the ICA, is converted into a differential capacity versus voltage curve (dQ/dV) by normalizing the discharge curve with respect to an initial discharge capacity of each cell, and when a ratio of a maximum peak height observed in the voltage region of 3.0 to 3.3 V to a maximum peak height observed in the voltage region of 3.6 to 4.0 V ((maximum peak height in the voltage region of 3.0 to 3.3 V/maximum peak height in the voltage region of 3.6 to 4.0 V) * 100) is defined as $\alpha$, the value of $\beta/\alpha$ is equal to or less than 1.0,
wherein the ICA is performed on a full cell including the anode active material.

**3.** The anode active material of claim 1, wherein the anode active material includes a metal-containing particle and a carbon material,
wherein the metal-containing particle includes at least one selected from the group consisting of Si, Al, Sn, Ge, Pb, In, As, Sb, P, and Ag.

**4.** The anode active material of claim 3, wherein the carbon material includes amorphous carbon, crystalline carbon, or a combination thereof.

**5.** The anode active material of claim 3, wherein a volumetric median particle diameter (Dv50) of the metal-containing particle is 70 to 200 nm, and a Dv50 of the anode active material is 2 to 20 $\mu$m.

**6.** A method for preparing the anode active material of any one of claims 1 to 5, the method comprising:

a first step of preparing a precursor powder by spray-drying a solution containing a metal-containing particle;
a second step of mixing and compositing the precursor powder with crystalline carbon and amorphous carbon; and
a third step of heat-treating the composited powder,
wherein the metal includes at least one selected from the group consisting of Si, Al, Ti, Mn, Ni, Cu, V, Zr, Co, Fe, and Nb, and
an internal chamber pressure in the first step is maintained at 5.0 to 7.0 kPa.

**7.** A rechargeable lithium battery, comprising:

an anode including the anode active material of any one of claims 1 to 5;
a cathode positioned opposite to the anode; and
an electrolyte disposed between the anode and the cathode.

3
2.5
2
1.5
1
0.5
0
1st Discharge Curve
2nd Discharge Curve
3rd Discharge Curve
Peak A
Peak B
Normalized Differential Capacity
[-(Q0)^-1 × dQ/dV (1/V)]
2.7
3
3.3
3.6
3.9
4.2
Voltage(V)


Figure 1

Normalized Differential Capacity
[-(Q0)^-1 × dQ/dV (1/V)]
1st Discharge Curve
2nd Discharge Curve
3rd Discharge Curve
Peak A
Peak B
0
0.5
1
1.5
2
2.5
3
2.7
3
3.3
3.6
3.9
4.2
Voltage(V)


Figure 2

100%
90%
80%
70%
Capacity Retention(%)
0
100
200
300
400
500
Cycle Number (N)
Comparative Example 1
Comparative Example 2
Comparative Example 3
Example 1


Figure 3

100%
90%
80%
70%
Capacity Retention(%)
0
100
200
300
400
500
Cycle Number (N)
Example 1
Example 3
Example 5

Figure 4

100%
90%
80%
70%
Capacity Retention(%)
0
100
200
300
400
500
Cycle Number (N)
Comparative
Example 3
Example 2
Example 4

Figure 5

Europäisches Patentamt
European Patent Office
Office européen des brevets

# EUROPEAN SEARCH REPORT

Application Number
EP 26 16 4470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 920 272 A1 (HANSOL CHEMICAL CO LTD [KR]) 8 December 2021 (2021-12-08) * paragraphs [0193] - [0198]; example 1 * ----- | 1-5,7 | INV. H01M10/44 H01M4/38 H01M4/583 |
| X | ROCK ET AL: "Synthesis and characterization of electrochemically active graphite-silicon-tin composite anodes for Li-ion applications", JOURNAL OF POWER SOURCES ELSEVIER, AMSTERDAM, NL, vol. 164, no. 2, 20 January 2007 (2007-01-20), pages 829-838, XP005737139, ISSN: 0378-7753, DOI: 10.1016/J.JPOWSOUR.2006.10.068 [retrieved on 2007-01-20] * section 2.1; page 830; table 1 * ----- | 1-5,7 | |
| X,D | EP 4 269 342 A1 (DAEJOO ELECTRONIC MAT CO LTD [KR]) 1 November 2023 (2023-11-01) * paragraphs [0088] - [0090], [0123]; example 1 * ----- | 1-7 | TECHNICAL FIELDS SEARCHED (IPC) H01M |

The present search report has been drawn up for all claims

| Place of search | Date of completion of the search | Examiner |
|---|---|---|
| The Hague | 14 April 2026 | Möller-Gulland, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

# ANNEX TO THE EUROPEAN SEARCH REPORT ON EUROPEAN PATENT APPLICATION NO. EP 26 16 4470

This annex lists the patent family members relating to the patent documents cited in the above-mentioned European search report. The members are as contained in the European Patent Office EDP file on
The European Patent Office is in no way liable for these particulars which are merely given for the purpose of information.

14-04-2026

| Patent document cited in search report | Publication date | Patent family member(s) | Publication date |
|---|---|---|---|
| EP 3920272 A1 | 08-12-2021 | EP 3920272 A1 | 08-12-2021 |
| | | KR 20210150769 A | 13-12-2021 |
| | | US 2021384491 A1 | 09-12-2021 |
| EP 4269342 A1 | 01-11-2023 | CN 116963999 A | 27-10-2023 |
| | | EP 4269342 A1 | 01-11-2023 |
| | | JP 7810449 B2 | 03-02-2026 |
| | | JP 2024501826 A | 16-01-2024 |
| | | KR 20220091674 A | 01-07-2022 |
| | | TW 202232811 A | 16-08-2022 |
| | | US 2024047660 A1 | 08-02-2024 |
| | | WO 2022139244 A1 | 30-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020210150769